# EUROPEAN PATENT SPECIFICATION

(11) **EP 4 378 733 B1**
(45) Date of publication and mention of the grant of the patent: **25.03.2026**
(21) Application number: 22885909.6
(22) Date of filing: 25.10.2022
(51) Int. Cl.: B60K 11/04, H01M 10/663, B60K 1/00, B60K 11/02, H01M 10/615, H01M 10/613, B60H 1/32, B60H 1/00, B60H 1/06, H01M 10/625

(54) **THERMAL MANAGEMENT SYSTEM AND VEHICLE HAVING SAME**
WÄRMEVERWALTUNGSSYSTEM UND FAHRZEUG DAMIT
SYSTÈME DE GESTION THERMIQUE ET VÉHICULE LE COMPRENANT

(30) Priority: 29.10.2021 CN 202111271041
(43) Date of publication of application: 05.06.2024
(73) Proprietor: BYD Company Limited, Shenzhen, Guangdong 518118 (CN)
(72) Inventor: ZHAO, Shangzhong, Shenzhen, Guangdong 518118 (CN); ZHANG, Junyan, Shenzhen, Guangdong 518118 (CN); PENG, Yicheng, Shenzhen, Guangdong 518118 (CN); QIN, Landong, Shenzhen, Guangdong 518118 (CN)
(74) Representative: Dehns Germany Partnerschaft mbB
(86) International application number: PCT/CN2022/127255
(87) International publication number: WO 2023/072032

(56) References cited:
- CN-A- 110 315 931
- CN-A- 111 354 996
- CN-A- 112 706 577
- CN-A- 113 002 269
- CN-A- 113 525 018
- CN-A- 113 547 890
- US-A1- 2016 109 163
- US-A1- 2016 153 343
- US-A1- 2019 277 184
- US-A1- 2020 189 357
- US-A1- 2021 080 027

## Description

### BACKGROUND

In related technologies, an electric powertrain water passage, a battery module, a heat pump module, and an engine water passage are integrated for control, so that systems coordinate with each other, to reduce energy consumption of a vehicle, or implement heat management and proper heat distribution and utilization of the vehicle in a hybrid electric mode.

However, there is a large amount of heat redundancy between the foregoing modules during operation or at the end of operation. This increases energy consumption of the vehicle and reduce a range of the vehicle. US 2020/189357 A1 discloses a thermal management system corresponding to the preamble of claim 1.

### SUMMARY

The present invention aims to resolve at least one of the technical problems in the related art.

To this end, one purpose of the present invention is to propose a thermal management system according to claim 1 that can properly utilize heat in a vehicle and improve a range of the vehicle.

The thermal management system according to the present invention includes: a heat pump module, an electric powertrain water passage, an engine water passage, a first heat exchanger, a battery direct cooling plate, and a control valve group. The first heat exchanger has a first heat exchange channel and a second heat exchange channel, and the first heat exchange channel is in communication with the heat pump module. The battery direct cooling plate is in communication with the heat pump module. The control valve group is in communication with all the electric powertrain water passage, the engine water passage, and the second heat exchange channel, and the control valve group is switchable between a first state and a second state. When the control valve group is in the first state, the engine water passage and the second heat exchange channel are in communication in series. When the control valve group is in the second state, the engine water passage, the electric powertrain water passage and the second heat exchange channel are in communication in series.

According to the thermal management system of embodiments of the present invention, the control valve group is used to control the electric powertrain water passage and the engine water passage to exchange heat with the heat pump module through the first heat exchanger. In addition, the battery direct cooling plate is integrated on the heat pump module. The thermal management system has a high degree of integration and can properly utilize heat generated by the various modules in the vehicle during operation. This can not only improve comfort for a user driving the vehicle, but also improve a range of the vehicle.

In some embodiments, the thermal management system further includes a warm air water passage. A warm air core is arranged on the warm air water passage, and the warm air water passage is in communication with the engine water passage and the second heat exchange channel through the control valve group. When the control valve group is in the first state, the engine water passage, the warm air water passage, and the second heat exchange channel are in communication in series.

In some embodiments, the control valve group further has a third state, and when the control valve group is in the third state, the engine water passage and the warm air water passage are in communication in series.

In some embodiments, the control valve group further has a fourth state, and when the control valve group is in the fourth state, the warm air water passage self-circulates.

In some embodiments, the control valve group further has a fifth state, and when the control valve group is in the fifth state, the electric powertrain water passage, the warm air water passage, and the second heat exchange channel are in communication in series.

In some embodiments, the control valve group further has a sixth state, and when the control valve group is in the sixth state, the engine water passage, the electric powertrain water passage, and the second heat exchange channel are in communication in series.

According to the present invention, the control valve group includes a first four-way valve and a first three-way valve. The first four-way valve has a first valve port, a second valve port, a third valve port, and a fourth valve port. The first valve port is in communication with one end of the electric powertrain water passage. The second valve port is in communication with the other end of the electric powertrain water passage. The third valve port is in communication with one end of the second heat exchange channel. The first three-way valve has a fifth valve port, a sixth valve port, and a seventh valve port. The fifth valve port is in communication with one end of the engine water passage. The sixth valve port, the other end of the engine water passage, and the other end of the second heat exchange channel are in communication with each other. The seventh valve port is in communication with the fourth valve port. When the control valve group is in the first state, the third valve port is in communication with the fourth valve port, and the fifth valve port is in communication with the seventh valve port. When the control valve group is in the second state, the first valve port is in communication with the fourth valve port, the second valve port is in communication with the third valve port, and the sixth valve port is in communication with the seventh valve port.

In some embodiments, the thermal management system further includes a warm air water passage. A warm air core is arranged on the warm air water passage, and the control valve group further includes a second four-way valve. The second four-way valve has an eighth valve port, a ninth valve port, a tenth valve port, and an eleventh valve port. The eighth valve port is in communication with one end of the engine water passage. The ninth valve port is in communication with the other end of the engine water passage. The tenth valve port is in communication with one end of the warm air water passage, and the other end of the warm air water passage is in communication with the other end of the second heat exchange channel. The eleventh valve port is in communication with the fifth valve port. When the control valve group is in the first state, the eighth valve port is in communication with the eleventh valve port, and the ninth valve port is in communication with the tenth valve port, so that the engine water passage, the warm air water passage, and the second heat exchange channel are in communication in series.

In some embodiments, the control valve group further has the third state. When the control valve group is in the third state, the fifth valve port is in communication with the sixth valve port, the eighth valve port is in communication with the eleventh valve port, and the ninth valve port is in communication with the tenth valve port, so that the engine water passage and the warm air water passage are in communication in series.

In some embodiments, the control valve group further has the fourth state. When the control valve group is in the fourth state, the fifth valve port is in communication with the sixth valve port, and the tenth valve port is in communication with the eleventh valve port, so that the warm air water passage self-circulates.

In some embodiments, the control valve group further has the fifth state. When the control valve group is in the fifth state, the first valve port is in communication with the fourth valve port, the second valve port is in communication with the third valve port, and the sixth valve port is in communication with the seventh valve port, so that the electric powertrain water passage, the warm air water passage, and the second heat exchange channel are in communication in series.

In some embodiments, the thermal management system further includes a heater. The heater is arranged between the fifth valve port and the eleventh valve port, or the heater is arranged on the warm air water passage.

In some embodiments, the control valve group further has the sixth state. When the control valve group is in the sixth state, the first valve port is in communication with the fourth valve port, the second valve port is in communication with the third valve port, and the fifth valve port is in communication with the seventh valve port.

In some embodiments, the thermal management system further includes a first radiator water passage. A first radiator is connected to the first radiator water passage. One end of the engine water passage is in communication with one end of the first radiator water passage, the other end of the engine water passage is in communication with the other end ofthe first radiator water passage, and the engine water passage and the first heat exchanger water passage are selectively in communication in series or out of communication.

In some embodiments, the electric powertrain water passage includes an electric powertrain and a second radiator. The electric powertrain and the second radiator are connected in series.

In some embodiments, the electric powertrain water passage further includes a direct connection branch. The second radiator and the direct connection branch are in communication in parallel, and the second radiator and the direct connection branch each switch between a state of being in communication with the electric powertrain in series and a state of being out of communication with the electric powertrain.

In some embodiments, the heat pump module includes a compressor, an in-cabin condenser, a second heat exchanger, an in-cabin evaporator, and a gas-liquid separator. One end of the in-cabin condenser is in communication with one end of the compressor. One end of the second heat exchanger is in communication with the other end of the in-cabin condenser through a pre-refrigeration branch, and the other end of the second heat exchanger is in communication with the other end of the in-cabin condenser through a pre-heating branch. One end of the in-cabin evaporator is in communication with the other end of the second heat exchanger through a post-refrigeration branch. One end of the gas-liquid separator is in communication with one end of the second heat exchanger through a post-heating branch, one end of the gas-liquid separator is in communication with the other end of the in-cabin evaporator, and the other end of the gas-liquid separator is in communication with the other end of the compressor.

In some embodiments, the battery direct cooling plate, the first heat exchange channel, and the in-cabin evaporator are in communication in parallel.

In some embodiments, a first two-way valve is arranged on the pre-refrigeration branch. A first one-way valve is arranged on the post-refrigeration branch, and the first one-way valve allows refrigerant of the second heat exchanger to flow to the in-cabin evaporator. A second two-way valve, a first expansion valve, and a second one-way valve are arranged on the pre-heating branch, and the second one-way valve allows refrigerant of the in-cabin condenser to flow to the second heat exchanger. A third two-way valve is arranged on the post-heating branch.

In some embodiments, the pre-heating branch includes a first section and a second section. One end of the first section is in communication with the other end of the in-cabin condenser, and the other end of the first section is in communication with the first one-way valve and the one end of the in-cabin evaporator. One end of the second section is in communication with the other end of the first section, and the other end of the second section is in communication with the other end of the second heat exchanger. The second two-way valve is arranged on the first section, and the first expansion valve and the second one-way valve are arranged on the second section.

In some embodiments, the gas-liquid separator includes a first flow path and a second flow path. One end of the first flow path is in communication with the first one-way valve and the other end of the first section, and the other end of the first flow path is in communication with the one end of the in-cabin evaporator and the one end of the second section. One end of the second flow path is in communication with the other end of the in-cabin evaporator, the post-heating branch, and the one end of the second heat exchanger, and the other end of the second flow path is in communication with the other end of the compressor.

A vehicle according to the present invention includes a thermal management system according to any of the foregoing.

According to the vehicle in embodiments of the present invention, the heat pump module, the electric powertrain water passage, the engine water passage, and the battery direct cooling plate arranged on the vehicle are controlled and adjusted by using the thermal management system, to properly utilize heat generated during operation of the vehicle and improve a range of the vehicle.

The additional aspects and advantages of the present invention will be provided in the following description, some of which will become apparent from the following description or may be learned from practices of the present invention.

### BRIEF DESCRIPTION OF THE DRAWINGS

The foregoing and/or additional aspects and advantages of the present invention will become apparent and comprehensible from the following descriptions of the embodiments with reference to the accompanying drawings, where:
FIG. 1 is a schematic structural diagram of a thermal management system according to an embodiment of the present invention;
FIG. 2 is a schematic structural diagram of a thermal management system according to an embodiment of the present invention;
FIG. 3 is a schematic structural diagram of a thermal management system according to an embodiment of the present invention;
FIG. 4 is a schematic structural diagram of a thermal management system according to an embodiment of the present invention;
FIG. 5 is a schematic structural diagram of a thermal management system according to an embodiment of the present invention;
FIG. 6 is a schematic structural diagram of a thermal management system according to an embodiment of the present invention;
FIG. 7 is a schematic structural diagram of a thermal management system according to an embodiment of the present invention;
FIG. 8 is a schematic structural diagram of a thermal management system according to an embodiment of the present invention;
FIG. 9 is a schematic structural diagram of a thermal management system according to an embodiment of the present invention;
FIG. 10 is a schematic structural diagram of a thermal management system according to an embodiment of the present invention;
FIG. 11 is a schematic structural diagram of a thermal management system according to an embodiment of the present invention; and
FIG. 12 is a schematic block diagram of a vehicle according to an embodiment of the present invention.

### DETAILED DESCRIPTION

The embodiments of the present invention are described below in detail. Examples of the embodiments are shown in the accompanying drawings, and same or similar reference signs in all the accompanying drawings indicate same or similar components or components having same or similar functions. The embodiments described below with reference to the accompanying drawings are exemplary, and are merely intended to explain the present invention and cannot be construed as a limitation to the present invention.

In the description of the present invention, it should be understood that orientation or position relationships indicated by the terms such as "center", "longitudinal", "transverse", "length", "width", "thickness", "on", "below", "front", "back", "left", "right", "vertical", "horizontal", "top", "bottom", "inside", "outside", "clockwise", "anticlockwise", "axial", "radial", and "circumferential" are based on orientation or position relationships shown in the accompanying drawings, and are used only for ease and brevity of illustration and description, rather than indicating or implying that the mentioned apparatus or component must have a particular orientation or must be constructed and operated in a particular orientation. Therefore, such terms should not be construed as limiting of the present invention. In addition, a feature defined to be "first" or "second" may explicitly or implicitly include one or more features. In the description of the present invention, unless stated otherwise, the meaning of "a plurality of" is two or more than two.

In addition, terms "first", "second", and "third" are used merely for the purpose of description, and shall not be construed as indicating or implying relative importance or implying a quantity of indicated technical features. Therefore, a feature restricted by "first", "second", or "third" may explicitly indicate or implicitly include at least one of such features. In the descriptions of the present invention, unless explicitly specified, "multiple" means at least two, for example, two or three. All directional indications (such as up, down, left, right, front, back...) in the embodiments of the present invention are only used to explain the relative positional relationship between components in a specific posture (as shown in the accompanying drawings, movement conditions, and the like. If the specific posture changes, the directional indications also change accordingly. In addition, the terms "include", "have", and any variant thereof are intended to cover a non-exclusive inclusion. For example, a process, method, system, product, or device that includes a series of steps or units is not limited to the listed steps or units; and instead, further optionally includes a step or unit that is not listed, or further optionally includes another step or unit that is intrinsic to the process, method, product, or device.

"Embodiment" mentioned in the present invention means that particular features, structures, or characteristics described with reference to the embodiment may be included in at least one embodiment of the present invention. The term appearing at different positions of the specification may not necessarily refer to the same embodiment, nor separate or alternative embodiments mutually exclusive of other embodiments. A person skilled in the art explicitly or implicitly understands that the embodiments described in the specification may be combined with other embodiments.

The embodiments of the present invention are described in detail below, and the embodiments described with reference to accompanying drawings are exemplary.

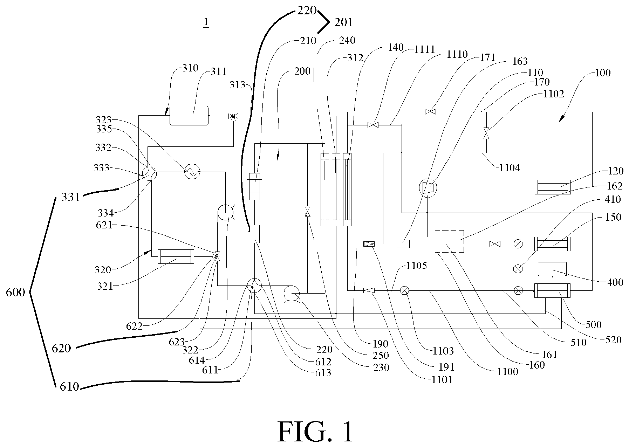

A thermal management system 1 according to the embodiments of the present invention is described below with reference to FIG. 1 to FIG. 11. As shown in FIG. 1, the thermal management system 1 includes a heat pump module 100, an electric powertrain water passage 200, an engine water passage 310, a first heat exchanger 500, a battery direct cooling plate 400, and a control valve group 600. The electric powertrain water passage 200 is connected to an electric powertrain 201 (including a motor 210 and a motor controller 220), and the electric powertrain 201 exchanges heat with coolant in the electric powertrain water passage 200. The engine water passage 310 is connected to an engine 311, and the engine 311 exchanges heat with coolant in the engine water passage 310. The battery direct cooling plate 400 is arranged on a battery of a vehicle, and the battery exchanges heat with refrigerant flowing through the battery direct cooling plate 400.

Specifically, the first heat exchanger 500 has a first heat exchange channel 510 and a second heat exchange channel 520. The battery direct cooling plate 400 is in communication with the heat pump module 100. The control valve group 600 is in communication with all the electric powertrain water passage 200, the engine water passage 310, and the second heat exchange channel 520, and the control valve group 600 is switchable between a first state and a second state. When the control valve group 600 is in the first state, the engine water passage 310 and the second heat exchange channel 520 are in communication in series. When the control valve group 600 is in the second state, the engine water passage 310, the electric powertrain water passage 200, and the second heat exchange channel 520 are in communication in series.

It should be noted that the first heat exchanger 500 may be a plate heat exchanger. The plate heat exchanger enables coolant or refrigerant to exchange heat. When the control valve group 600 is in the first state, the engine water passage 310 is in communication with the second heat exchange channel 520 on the first heat exchanger 500, so that the heat pump module 100 can absorb excess heat of the engine 311. In addition, when the control valve group 600 is in the second state, the electric powertrain water passage 200 is in communication with the second heat exchange channel 520 on the first heat exchanger 500, so that the heat pump module 100 can absorb excess heat of the electric powertrain 201. Therefore, energy utilization efficiency of the thermal management system 1 is improved. In addition, the engine water passage 310, the electric powertrain water passage 200, and the heat pump module 100 are integrated through the first heat exchanger 500, so that the thermal management system 1 has a higher degree of integration.

In addition, each component in the thermal management system 1 has an independent operation function. In other words, the heat pump module 100, the battery direct cooling plate 400, the engine water passage 310, and the electric powertrain water passage 200 each can perform an independent circulation cooling mode or heating mode for operation and use.

According to the thermal management system 1 of this embodiment of the present invention, the control valve group 600 is used to control the electric powertrain water passage 200 and the engine water passage 310 to exchange heat with the heat pump module 100 through the first heat exchanger 500. In addition, the battery direct cooling plate 400 is integrated on the heat pump module 100, so that a flow path of energy circulated in the thermal management system 1 can be adjusted according to usage requirements. Therefore, the thermal management system 1 has higher energy utilization efficiency, and the thermal management system 1 further has a high degree of integration and can properly utilize heat generated by the various components in the vehicle during operation. This can improve comfort for a user driving the vehicle, and can improve a range of the vehicle.

As shown in FIG. 1 to FIG. 11, the control valve group 600 includes a first four-way valve 610 and a first three-way valve 620. The first four-way valve 610 has a first valve port 611, a second valve port 612, a third valve port 613, and a fourth valve port 614. The first valve port 611 is in communication with one end of the electric powertrain water passage 200. The second valve port 612 is in communication with the other end of the electric powertrain water passage 200. The third valve port 613 is in communication with one end of the second heat exchange channel 520. The first three-way valve 620 has a fifth valve port 621, a sixth valve port 622, and a seventh valve port 623. The fifth valve port 621 is in communication with one end of the engine water passage 310. The sixth valve port 622, the other end of the engine water passage 310, and the other end of the second heat exchange channel 520 are in communication with each other. The seventh valve port 623 is in communication with the fourth valve port 614.

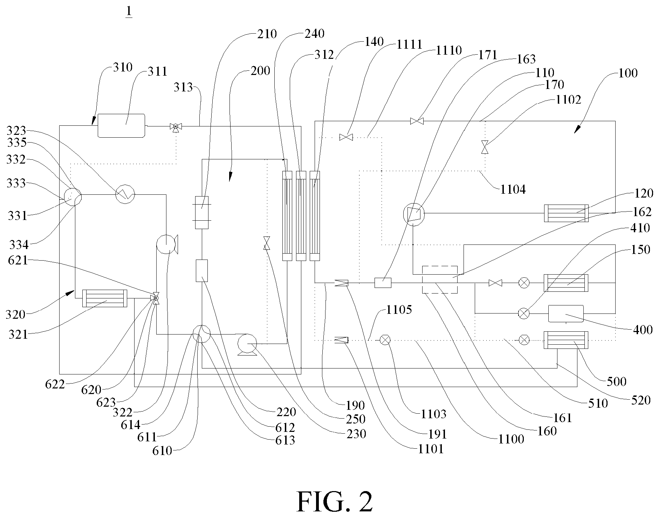

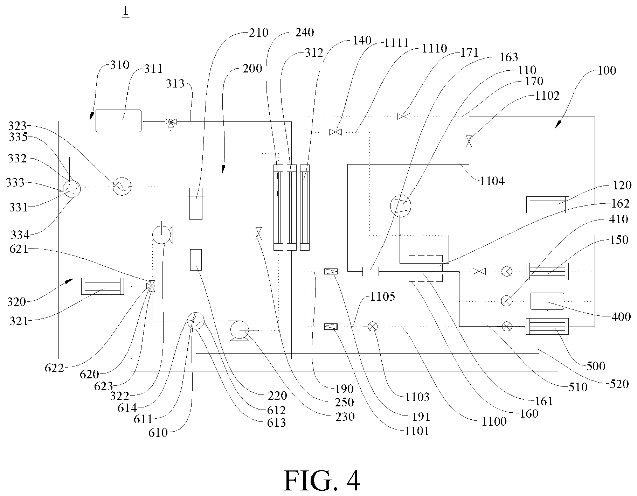

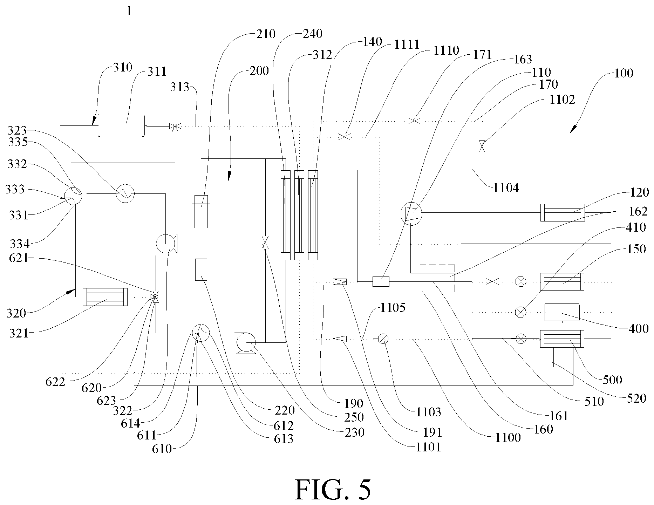

It can be understood that during use, the control valve group 600 may select communication statuses of the first four-way valve 610 and the first three-way valve 620, to control a use mode of the electric powertrain water passage 200 and the engine water passage 310 including: the electric powertrain water passage 200 can circulate independently for heating or cooling (as shown in FIG. 2), or the electric powertrain water passage 200 can be in communication with the second heat exchange channel 520 for heating or cooling (as shown in FIG. 4), or the engine water passage 310 can circulate independently for heating or cooling (as shown in FIG. 2), or the engine water passage 310 can be in communication with the second heat exchange channel 520 for heating or cooling (as shown in FIG. 5). With this arrangement, the first heat exchanger 500 can participate in a circulation process of the electric powertrain water passage 200 or the engine water passage 310, so that the heat pump module 100 absorbs and utilizes excess heat of the engine 311 or the electric powertrain 201, to improve energy utilization efficiency of the thermal management system 1.

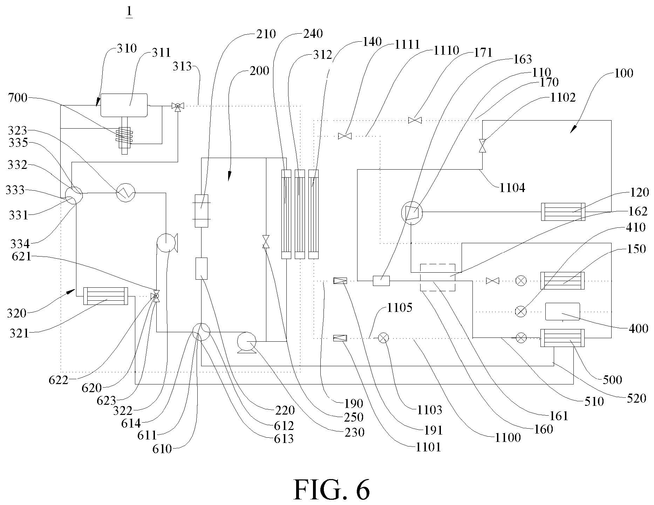

When the control valve group 600 is in the first state, as shown in FIG. 5 and FIG. 6, the third valve port 613 is in communication with the fourth valve port 614, and the fifth valve port 621 is in communication with the seventh valve port 623. When the control valve group 600 is in the second state, the first valve port 611 is in communication with the fourth valve port 614, the second valve port 612 is in communication with the third valve port 613, and the sixth valve port 622 is in communication with the seventh valve port 623.

Specifically, when the control valve group 600 is in the first state, one end of the engine water passage 310 is in communication with one end of the second heat exchange channel 520, the other end of the second heat exchange channel 520 is in communication with the third valve port 613, the third valve port 613 is in communication with the fourth valve port 614, the fourth valve port 614 is in communication with the seventh valve port 623, the seventh valve port 623 is in communication with the fifth valve port 621, and the fifth valve port 621 is in communication with the other end of the engine water passage 310, so that the engine water passage 310 and the second heat exchange channel 520 are in communication in series. In this case, the first valve port 611 and the second valve port 612 in the first four-way valve 610 can also be in communication, so that the electric powertrain water passage 200 works in a form of independent circulation. This facilitates precise control of heat dissipation of the electric powertrain water passage 200.

When the control valve group 600 is in the second state, as shown in FIG. 4, one end of the electric powertrain water passage 200 is in communication with the first valve port 611, the first valve port 611 is in communication with the fourth valve port 614, the fourth valve port 614 is in communication with the seventh valve port 623, the seventh valve port 623 is in communication with the sixth valve port 622, the sixth valve port 622 is in communication with the other end of the second heat exchange channel 520, one end of the second heat exchange channel 520 is in communication with the third valve port 613, the third valve port 613 is in communication with the second valve port 612, and the second valve port 612 is in communication with the other end of the electric powertrain water passage 200. That is, the electric powertrain water passage 200 and the second heat exchange channel 520 are in communication in series. The first four-way valve 610 and the first three-way valve 620 of the control valve group 600 are arranged, and the first four-way valve 610 and the first three-way valve 620 are controlled to switch between multiple modes. In a simple, effective, and controllable manner, the thermal management system 1 has a high degree of integration and can properly utilize heat generated by various modules in the vehicle during operation. This can not only improve comfort for a user driving the vehicle, but also improve a range of the vehicle.

In some embodiments, as shown in FIG. 1 to FIG. 11, the thermal management system 1 further includes a warm air water passage 320. A warm air core 321 is arranged on the warm air water passage 320, and the warm air water passage 320 is connected to the second heat exchange channel 520 through the control valve group 600 and the engine water passage 310. As shown in FIG. 5 and FIG. 6, when the control valve group 600 is in the first state, the engine water passage 310, the warm air water passage 320, and the second heat exchange channel 520 are in communication in series. It can be understood that a warm air water pump 322 may further be arranged on the warm air water passage 320. The warm air water pump 322 is suitable for driving coolant in the warm air water passage 320 to circulate, so that the coolant can dissipate heat on the warm air core 321, to implement a heating function of the warm air core 321 for a passenger compartment and improve comfort for driving the vehicle.

Specifically, the thermal management system 1 further includes the warm air water passage 320, and the warm air core 321 is arranged on the warm air water passage 320. The control valve group 600 further includes a second four-way valve 331, the second four-way valve 331 has an eighth valve port 332, a ninth valve port 333, a tenth valve port 334, and an eleventh valve port 335. The eighth valve port 332 is in communication with one end of the engine water passage 310. The ninth valve port 333 is in communication with the other end of the engine water passage 310. The tenth valve port 334 is in communication with one end of the warm air water passage 320, and the other end of the warm air water passage 320 is in communication with the other end of the second heat exchange channel 520. The eleventh valve port 335 is in communication with the fifth valve port 621. As shown in FIG. 5 and FIG. 6, when the control valve group 600 is in the first state, the eighth valve port 332 is in communication with the eleventh valve port 335, and the ninth valve port 333 is in communication with the tenth valve port 334, so that the engine water passage 310, the warm air water passage 320, and the second heat exchange channel 520 are in communication in series.

Certainly, the warm air water passage 320 can circulate independently to provide heat for the passenger compartment in the vehicle, or can be in communication with the engine water passage 310 or the first heat exchanger 500 according to usage of the vehicle, to improve energy utilization efficiency of the thermal management system 1, so as to improve a range of the vehicle.

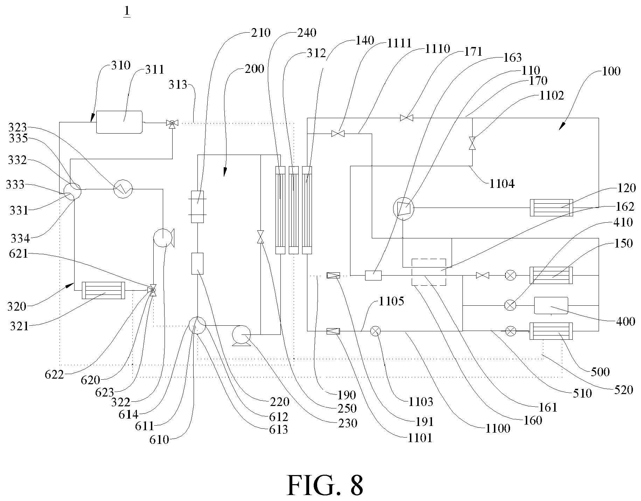

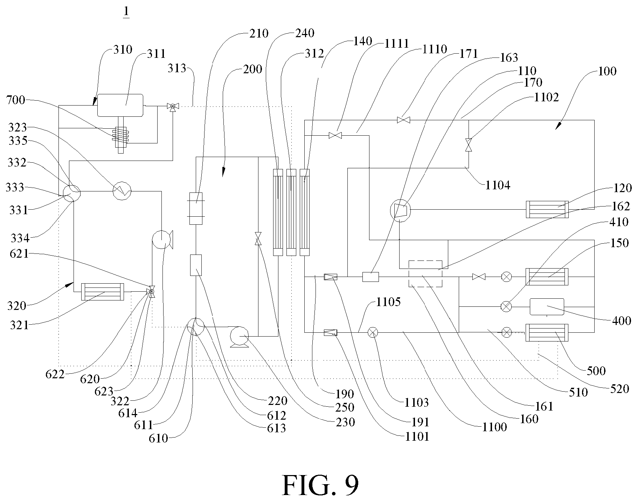

In some embodiments, the control valve group 600 further has a third state. When the control valve group 600 is in the third state, as shown in FIG. 8 and FIG. 9, the engine water passage 310 and the warm air water passage 320 are in communication in series. Therefore, the control valve group 600 is adjusted to the third state, so that the engine water passage 310 and the warm air water passage 320 are in communication, and excess heat on the engine 311 can be transferred to the warm air core 321 through coolant, to implement a heating function of the warm air core 321 for the passenger compartment.

Specifically, when the control valve group 600 is in the third state, as shown in FIG. 8 and FIG. 9, the fifth valve port 621 is in communication with the sixth valve port 622, the eighth valve port 332 is in communication with the eleventh valve port 335, and the ninth valve port 333 is in communication with the tenth valve port 334, so that the engine water passage 310 and the warm air water passage 320 are in communication in series.

In this way, the engine water passage 310 and the warm air water passage 320 are in communication under the control of the control valve group 600, and heat on the engine 311 can be supplied to the warm air water passage 320 for use through circulation of coolant. Heating performance of the warm air core 321 can be improved, the warm air water passage 320 can more quickly heat the interior of the vehicle to a temperature required by the user, and working efficiency of the warm air water passage 320 can be improved. In addition, the warm air water passage 320 can also use excess heat of the engine 311, so that the thermal management system 1 properly utilizes heat in the vehicle, to improve a range of the vehicle.

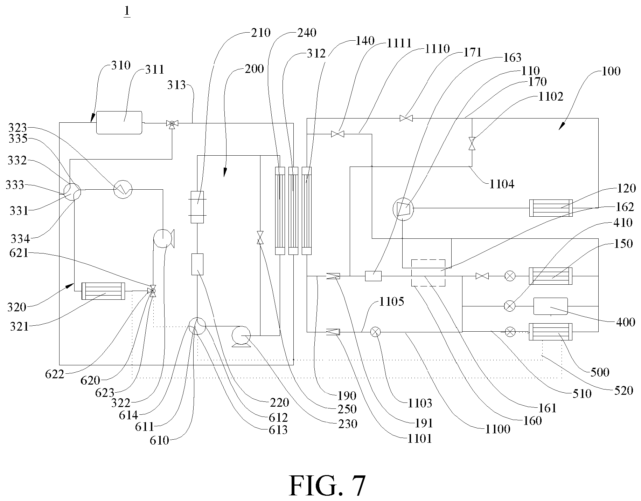

In some embodiments, the control valve group 600 further has a fourth state. When the control valve group 600 is in the fourth state, as shown in FIG. 7, the warm air water passage 320 self-circulates. With this arrangement, the control valve group 600 is in the fourth state, and the warm air water passage 320 circulates independently to implement the heating function.

Specifically, the control valve group 600 further has the fourth state. When the control valve group 600 is in the fourth state, as shown in FIG. 7, the fifth valve port 621 is in communication with the sixth valve port 622, and the tenth valve port 334 is in communication with the eleventh valve port 335, so that warm air water passage 320 self-circulates.

In this way, when the control valve group 600 is in the fourth state, the tenth valve port 334 is in communication with the eleventh valve port 335, so that the engine water passage 310 is in an independent operating state. This facilitates accurate thermal management of the engine 311, so that the engine 311 work in an efficient state. In this case, the ninth valve port 333 is in communication with the tenth valve port 334, and the warm air water passage 320 can also operate independently, and can implement a heating function, to improve comfort of the vehicle.

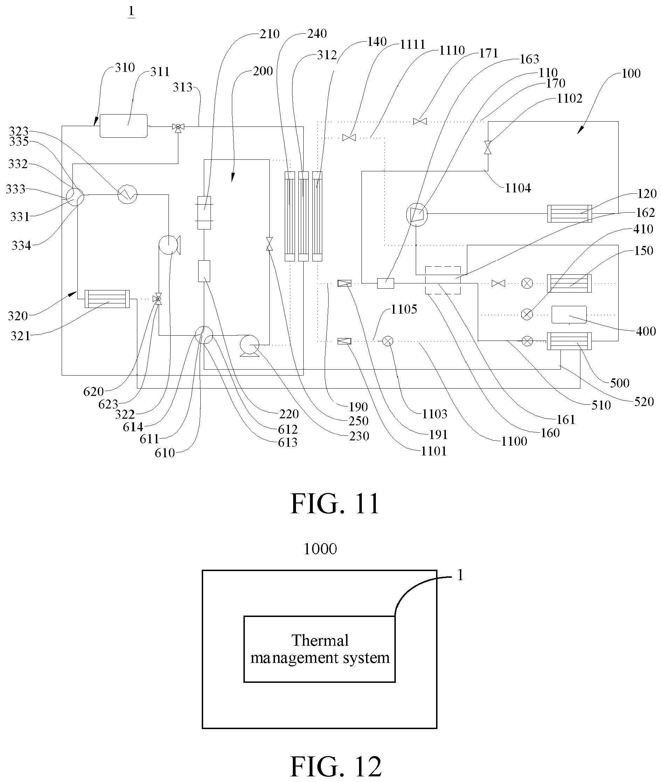

In some embodiments, the control valve group 600 further has a fifth state. When the control valve group 600 is in the fifth state, as shown in FIG. FIG. 11, the electric powertrain water passage 200 and the warm air water passage 320 are in communication in series. Therefore, the control valve group 600 is adjusted to the fifth state, so that the electric powertrain water passage 200 and the warm air water passage 320 are in communication, and excess heat on the electric powertrain 201 can be transferred to the warm air core 321 through coolant, to implement a heating function of the warm air core 321 for the passenger compartment.

Specifically, when the control valve group 600 is in the fifth state, as shown in FIG. 11, the first valve port 611 is in communication with the fourth valve port 614, the second valve port 612 is in communication with the third valve port 613, and the sixth valve port 622 is in communication with the seventh valve port 623, so that the electric powertrain water passage 200 and the warm air water passage 320 are in communication in series.

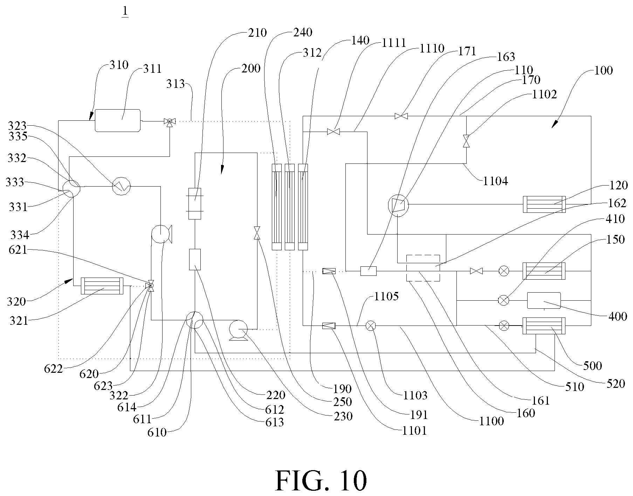

In some embodiments, the control valve group 600 further has a sixth state. When the control valve group 600 is in the sixth state, as shown in FIG. 10, the engine water passage 310, the electric powertrain water passage 200, and the second heat exchange channel 520 are in communication in series.

Specifically, when the control valve group 600 is in the sixth state, as shown in FIG. 10, the first valve port 611 is in communication with the fourth valve port 614, the second valve port 612 is in communication with the third valve port 613, and the fifth valve port 621 is in communication with the seventh valve port 623. In some embodiments, when the control valve group 600 is in the sixth state, as shown in FIG. 10, the engine water passage 310, the warm air water passage 320, the electric powertrain water passage 200, and the second heat exchange channel 520 are in communication in series, the first valve port 611 is in communication with the fourth valve port 614, the second valve port 612 is in communication with the third valve port 613, the fifth valve port 621 is in communication with the seventh valve port 623, the eighth valve port 332 is in communication with the eleventh valve port 335, and the ninth valve port 333 is in communication with the tenth valve port 334.

It should be noted that when the engine water passage 310 and the electric powertrain water passage 200 are in communication with the second heat exchange channel 520, excess heat of the engine 311 can be transferred to the electric powertrain 201 to heat the electric powertrain 201, and can also be transferred to the heat pump module 100 through the second heat exchange channel 520, so that heating performance of the heat pump module 100 is improved.

In some embodiments, as shown in FIG. 1 to FIG. 11, the thermal management system 1 further includes a heater 323. The heater 323 is arranged between the fifth valve port 621 and the eleventh valve port 335, or the heater 323 is arranged on the warm air water passage 320.

It can be understood that the heater 323 can provide more heat after start, and the heat can flow to the warm air core 321 through circulation of the warm air water passage 320, so that heating performance of the warm air core 321 is improved. Specifically, in some embodiments, as shown in FIG. 1 to FIG. 11, the heater 323 may be a PTC heater, and the PTC heater 323 may be in communication with the warm air water pump 322 in series. With this arrangement, when the vehicle requires higher temperature heating, the PTC heater 323 can be turned on according to a situation, to provide more heat to participate in coolant circulation, so that performance of the warm air core 321 can be improved, and heating efficiency in the vehicle is improved.

In addition, when the electric powertrain 201 has a large heating demand, the control valve group 600 can be set to the fifth state. That is, the electric powertrain water passage 200, the warm air water passage 320, and the second heat exchange channel 520 are in communication in series, and the heater 323 is started, to heat the electric powertrain 201. When the engine 311 needs to be warmed up, the control valve group 600 can be set to the third state. That is, the engine water passage 310 and the warm air water passage 320 are in communication in series, and the heater 323 is started, to warm up the engine 311.

In some embodiments, as shown in FIG. 1 to FIG. 11, the thermal management system 1 further includes a first radiator water passage 313, and a first radiator 312 is connected to the first radiator water passage 313. One end of the engine water passage 310 is in communication with one end of the first radiator water passage 313, the other end of the engine water passage 310 is in communication with the other end of the first radiator water passage 313, and the engine water passage 310 and the first heat radiator water passage 313 are selectively in communication in series or out of communication.

It should be noted that the engine 311 is in communication with the first radiator water passage 313, so that coolant flowing in the engine 311 dissipates heat from the engine 311. With this arrangement, the first radiator water passage 313 is in communication with the engine water passage 310, so that a heat dissipation effect of the engine water passage 310 is improved, and the engine 311 is used more stably and efficiently.

In some specific embodiments, as shown in FIG. 1 to FIG. 11, the electric powertrain water passage 200 further includes a second radiator 240. The electric powertrain 201 and the second radiator 240 are connected in series. It should be noted that as shown in FIG. 1 to FIG. 11, the electric powertrain water passage 200 includes a motor 210, a motor controller 220, a motor water pump 230, and the second radiator 240. The motor 210, the motor controller 220, the motor water pump 230, and the second radiator 240 are connected in series. It can be understood that the motor water pump 230 can drive coolant to circulate, so that the coolant can circulate along the motor water pump 230, the motor controller 220, the motor 210, and the second radiator 240 in sequence, to dissipate heat from the motor 210 and the motor controller 220 by using the second radiator 240.

In some embodiments, as shown in FIG. 1 to FIG. 11, the electric powertrain water passage 200 further includes a direct connection branch 250. The second radiator 240 and the direct connection branch 250 are in communication in parallel. The second radiator 240 and the direct connection branch 250 each switch between a state of being in communication with the electric powertrain 201 in series and a state of being out of communication with the electric powertrain 201.

In this way, when the direct connection branch 250 is in communication, coolant does not communicate through the second radiator 240 during circulation, to prevent heat from being dissipated by the second radiator 240 when the electric powertrain 201 needs to be heated.

In some embodiments, as shown in FIG. 1 to FIG. 11, the heat pump module 100 includes a compressor 110, an in-cabin condenser 120, a second heat exchanger 140, an in-cabin evaporator 150, and a gas-liquid separator 160. One end of the in-cabin condenser 120 is in communication with one end of the compressor 110. One end of the second heat exchanger 140 is in communication with the other end of the in-cabin condenser 120 through a pre-refrigeration branch 170, and the other end of the second heat exchanger 140 is in communication with the other end of the in-cabin condenser 120 through a pre-heating branch 1100. One end of the in-cabin evaporator 150 is in communication with the other end of the second heat exchanger 140 through a post-refrigeration branch 190. One end of the gas-liquid separator 160 is in communication with one end of the second heat exchanger 140 through a post-heating branch 1110, one end of the gas-liquid separator 160 is in communication with the other end of the in-cabin evaporator 150, and the other end of the gas-liquid separator 160 is in communication with the other end of the compressor 110.

In other words, the compressor 110, the in-cabin condenser 120, the second heat exchanger 140, the in-cabin evaporator 150, and the gas-liquid separator 160 are connected in series. In addition, the battery direct cooling plate 400, the first heat exchange channel 510, and the in-cabin evaporator 150 are connected in parallel. In addition, when the heat pump module 100 is in use, the battery direct cooling plate 400, the first heat exchange channel 510 and the cabin evaporator 150 can be in communication in parallel, so that refrigerant entering the compressor 110 can absorb heat of components such as the battery, the engine 311, and the electric powertrain 201. Heat generated by the vehicle during operation and use can be utilized more properly, and the vehicle has a high degree of integration, to improve a range of the vehicle.

In some embodiments, as shown in FIG. 1 to FIG. 11, a first two-way valve 171 is arranged on the pre-refrigeration branch 170. A first one-way valve 191 is arranged on the post-refrigeration branch 190, and the first one-way valve 191 allows refrigerant of the second heat exchanger 140 to flow to the in-cabin evaporator 150. A second two-way valve 1102, a first expansion valve 1103, and a second one-way valve 1101 are arranged on the pre-heating branch 1100, and the second one-way valve 1101 allows refrigerant of the in-cabin condenser 120 to flow to the second heat exchanger 140. A third two-way valve 1111 is arranged on the post-heating branch 1110.

It can be understood that the first two-way valve 171 controls whether refrigerant flows to the pre-refrigeration branch 170 for circulation, and the first one-way valve 191 controls flowing of refrigerant in the post-refrigeration branch 190, to control whether the refrigerant can flow to the in-cabin evaporator 150 through the second heat exchanger 140 without reverse flow, to implement a refrigeration function of the heat pump module 100. The second two-way valve 1102, the first expansion valve 1103, and the second one-way valve 1101 control flowing of refrigerant in the pre-heating branch 1100, to control whether the refrigerant flows through the pre-heating branch 1100. The third two-way valve 1111 controls whether the refrigerant flows through the post-heating branch 1110 without reverse flow, to implement a heating function of the heat pump module 100.

In some embodiments, the pre-heating branch 1100 includes a first section 1104 and a second section 1105. One end of the first section 1104 is in communication with the other end of the in-cabin condenser 120, and the other end of the first section 1104 is in communication with the first one-way valve 191 and one end of the in-cabin evaporator 150. One end of the second section 1105 is in communication with the other end of the first section 1104, and the other end of the second section 1105 is in communication with the other end of the second heat exchanger 140. The second two-way valve 1102 is arranged on the first section 1104, and the first expansion valve 1103 and the second one-way valve 1101 are arranged on the second section 1105. In this way, the first section 1104 and the second section 1105 form the pre-heating branch 1100, so that refrigerant flowing in the pre-heating branch 1100 can be controlled to flow to different structures for heat exchange, to implement multiple working modes of the heat pump module 100 under different working conditions.

In some embodiments, as shown in FIG. 1 to FIG. 11, the gas-liquid separator 160 includes a first flow path 161 and a second flow path 162. One end of the first flow path 161 is in communication between the second heat exchanger 140 and the in-cabin evaporator 150. A liquid reservoir 163 is arranged on the first flow path 161. The second flow path 162 is in communication between the in-cabin evaporator 150 and the compressor 110. In this way, the first flow path 161 and the second flow path 162 provided on the gas-liquid separator 160 can separate gas and liquid of refrigerant during use, so that drier refrigerant participates in circulation, and the refrigerant does not affect normal operation of the compressor 110 when entering the compressor 110, to improve safety and reliability of the heat pump module 100.

As shown in FIG. 12, a vehicle 1000 according to an embodiment of the present invention includes the thermal management system 1 according to any one of the above embodiments. During use of the vehicle 1000, to improve a user's comfort during driving of the vehicle, a cooling mode or a heating mode can be turned on in the vehicle 1000 to improve comfort in a cab of the vehicle 1000.

In this way, the thermal management system 1 in this application can properly utilize heat generated by the vehicle 1000 during driving to improve a range of the vehicle 1000 during driving, and can improve effect of the vehicle 1000 in the cooling mode or the heating mode to reduce an energy consumption ratio of the vehicle 1000 during use, so that the vehicle 1000 has a larger range.

Various working modes of interaction between the heat pump module 100, the electric powertrain water passage 200, the engine water passage 310, the warm air water passage 320, and the battery direct cooling plate 400 in the thermal management system 1 are described in detail below with reference to FIG. 2 to FIG. 10.

Passenger compartment cooling mode: As shown in FIG. 2, when the passenger compartment needs to be cooled in summer, refrigerant is compressed in the compressor 110 and output from one end of the compressor 110, so that the refrigerant circulates along the in-cabin condenser 120 (which does not work, only allows the refrigerant through), the second heat exchanger 140, the in-cabin evaporator 150, and the gas-liquid separator 160 in sequence, and finally returns to the compressor 110 to complete circulation. In this process, low-temperature refrigerant evaporates and absorbs heat at the in-compartment evaporator 150, to cool the passenger compartment. High-temperature refrigerant condenses and releases heat at the second heat exchanger 140, to release heat into the air. Specifically, the second heat exchanger 140 is an air-cooled heat exchanger arranged in a front compartment (engine compartment) of the vehicle.

Battery cooling mode: As shown in FIG. 2, when the battery needs to be cooled, the second expansion valve 410 is opened to allow low-temperature refrigerant in the heat pump module 100 to enter the battery direct cooling plate 400, so that the refrigerant can pass through the battery direct cooling plate 400 during circulation, to absorb the heat from the battery. This not only cools the battery, but also allows excess heat of the battery to be absorbed and utilized to reduce energy consumption of the thermal management system 1.

Electric powertrain 201 cooling mode: As shown in FIG. 2, when components of the motor 210 need to be cooled, coolant circulates independently in the electric powertrain water passage 200. In this mode, the second radiator 240 and the electric powertrain 201 are in communication in series, and the direct connection branch 250 and the electric powertrain 201 are out of communication. In other words, the refrigerant can circulate along the motor controller 220, the motor 210, and the second radiator 240 in sequence, to cool the motor 210 and the motor controller 220 by using the second radiator 240. The second radiator 240 is an air-cooled radiator arranged in the front compartment (engine compartment) of the vehicle.

Engine cooling mode: As shown in FIG. 2, when the engine 311 needs to be cooled and there is a large cooling demand, coolant is in series communication between the engine water passage 310 and the first radiator water passage 313 to perform large cooling circulation. That is, the coolant is circulated between the engine 311 and the first radiator 312 to cool the engine 311 by the first radiator 312. The first radiator 312 is an air-cooled radiator arranged in the front compartment (engine compartment) of the vehicle.

In addition, when the engine 311 needs to be cooled and there is a small cooling demand, the coolant flows in the engine water passage 310 to perform small cooling circulation. In other words, communication between the first radiator water passage 313 and the engine water passage 310 is disconnected, and the coolant is used to cool the engine 311.

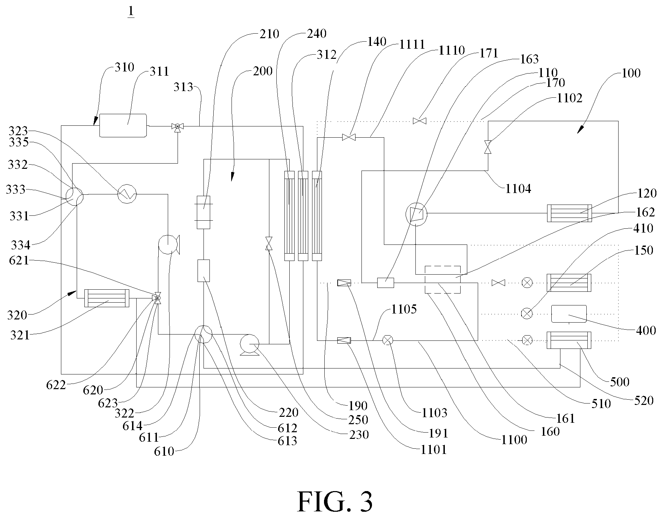

Passenger compartment heating mode 1: As shown in FIG. 3, when the passenger compartment of the vehicle needs to be heated in a cold environment, the pre-heating branch 1100 and the post-heating branch 1110 are opened, and refrigerant is compressed in the compressor 110 and output from one end of the compressor 110. Then, the refrigerant flows along the in-cabin condenser 120, the second two-way valve 1102, the first expansion valve 1103, the second one-way valve 1101, the second heat exchanger 140, the third two-way valve 1111, and the gas-liquid separator 160, and then returns to the compressor 110. In this process, high-temperature refrigerant condenses and releases heat at the in-cabin condenser 120 to heat the passenger compartment, while low-temperature refrigerant evaporates and absorbs heat at the second heat exchanger 140, to absorb heat in the air.

Passenger compartment heating mode 2: When the outdoor environment is excessively cold, heat absorbed in the air by only the second heat exchanger 140 is not enough to meet a heating demand. However, excess heat exits in the electric powertrain water passage 200, which can be absorbed and utilized for heating indoor spaces. As shown in FIG. 4, the second two-way valve 1102 on the first section 1104 of the pre-heating branch 1100 is opened, and the first section 1104 of the pre-heating branch 1100 is in communication with the first heat exchange channel 510, and at the same time, the control valve group 600 is set to the second state to communicate the electric powertrain water passage 200 and the second heat exchange channel 520 in series. In this mode, the direct connection branch 250 and the electric powertrain 201 are in communication in series, and the second radiator 240 and the electric powertrain 201 are out of communication. With this arrangement, excess heat in the electric powertrain water passage 200 is transferred to the first heat exchanger 500 through flowing of coolant, so that the heat pump module 100 can absorb heat on the first heat exchanger 500 during circulation, to improve heating performance of the heat pump module 100.

Passenger compartment heating mode 3: When the outdoor environment is excessively cold, heat absorbed in the air by only the second heat exchanger 140 is not enough to meet a heating demand. However, when the vehicle is performing hybrid motion, the components of the engine 311 also have high heat, which can also be absorbed and utilized to heat the indoor space. As shown in FIG. 5, the second two-way valve 1102 on the first section 1104 of the pre-heating branch 1100 is opened, and the first section 1104 of the pre-heating branch 1100 is in communication with the first heat exchange channel 510, and at the same time, the control valve group 600 is set to the first state to communicate the engine water passage 310 and the second heat exchange channel 520 in series. In this mode, the engine water passage 310 and the first radiator water passage 313 are out of communication. With this arrangement, excess heat in the engine water passage 310 is transferred to the first heat exchanger 500 through flowing of coolant, so that the heat pump module 100 can absorb heat on the first heat exchanger 500 during circulation, to improve heating performance of the heat pump module 100. In other embodiments, as shown in FIG. 6, vehicle exhaust also contains an amount of heat. An exhaust heat exchanger 700 can be arranged and in communication with the engine water passage 310 in parallel, to recover the heat in the exhaust and transfer the heat to the first heat exchanger 500 through the second heat exchange channel 520.

Passenger compartment heating mode 4: When the outdoor environment is excessively cold, heat absorbed in the air by only the second heat exchanger 140 of the heat pump module 100 is not enough to meet a heating demand. As shown in FIG. 7, in this case, the control valve group 600 is set to the fourth state to allow the warm air water passage 320 to self-circulate, and the heater 323 is started to heat coolant. At the same time, the warm air core 321 is started to transfer heat of the coolant to the passenger compartment, to supplement heating of the heat pump module 100, so as to improve overall heating performance of the thermal management system 1.

Passenger compartment heating mode 5: When the outdoor environment is excessively cold, heat absorbed in the air by only the second heat exchanger 140 of the heat pump module 100 is not enough to meet a heating demand. As shown in FIG. 8, in this case, the control valve group 600 is set to the third state, to communicate the warm air water passage 320 and the engine water passage 310 in series, and the warm air core 321 is started to transfer heat of the engine 311 to the passenger compartment, to supplement heating of the heat pump module 100, so as to improve overall heating performance of the thermal management system 1.

In other embodiments, as shown in FIG. 9, vehicle exhaust also contains an amount of heat. An exhaust heat exchanger 700 can be arranged and in communication with the engine water passage 310 in parallel, to recover the heat in the exhaust and transfer the heat in the exhaust to the passenger compartment through the warm air core 321.

Electric powertrain 201 heating mode 1: To keep the electric powertrain 201 at a suitable temperature to ensure efficient operation, the electric powertrain 201 needs to be heated when an environment temperature is low. As shown in FIG. 10, in this case, the control valve group 600 is set to the sixth state, the electric powertrain water passage 200, the engine water passage 310, and the second heat exchange channel 520 are in communication in series. In this mode, the direct connection branch 250 and the electric powertrain 201 are in communication in series, and the second radiator 240 and the electric powertrain 201 are out of communication. With this arrangement, excess heat in the engine water passage 310 is transferred to the electric powertrain water passage 200 through flowing of coolant, to heat the electric powertrain 201 by using excess heat of the engine 311, so as to improve energy utilization efficiency of the thermal management system 1.

Electric powertrain 201 heating mode 2: To keep the electric powertrain 201 at a suitable temperature to ensure efficient operation, the electric powertrain 201 needs to be heated when an environment temperature is low. As shown in FIG. 11, in this case, the control valve group 600 is set to the fifth state, the electric powertrain water passage 200, the warm air water passage 320, and the second heat exchange channel 520 are in communication in series. In this mode, the direct connection branch 250 and the electric powertrain 201 are in communication in series, and the second radiator 240 and the electric powertrain 201 are out of communication. At the same time, the heater 323 is started, and heat generated by the heater 323 is transferred to the electric powertrain water passage 200 through flowing of coolant. This is applicable to a case in which heat of the engine 311 cannot meet a heating demand of the electric powertrain 201, and can implement effective heating of the electric powertrain 201.

Engine heating mode: To allow the engine 311 to quickly reach a suitable temperature after start to ensure efficient operation, the engine 311 needs to be warmed up. As shown in FIG. 8, in this case, the control valve group 600 is set to the third state, to communicate the warm air water passage 320 and the engine water passage 310 in series, and the heater 323 is started. Heat generated by the heater 323 is transferred to the engine 311, to implement effective heating of the engine 311.

In addition, when the battery needs to be heated, a polyimide (Polyimide, PI) heating film can be selected to arrange on the battery to heat the battery, so as to meet a heating demand of the battery simply and reliably.

In conclusion, during use of the vehicle, the heat pump module 100, the electric powertrain water passage 200, the engine water passage 310, and the battery direct cooling plate 400 arranged on the vehicle are controlled and adjusted by using the thermal management system 1, to properly utilize heat generated during operation of the vehicle and improve a range of the vehicle, and the vehicle has a high degree of integration.

Other configurations and operations of the vehicle according to the embodiments of the present invention are known to those of ordinary skill in the art and will not be described in detail herein.

In the description of this specification, the description of the reference terms such as "an embodiment", "some embodiments", "exemplary embodiments", "example", "specific example", or "some examples" means that the specific features, structures, materials or characteristics described with reference to the embodiment or example are included in at least one embodiment or example of the present invention. In this specification, exemplary descriptions of the foregoing terms do not necessarily refer to the same embodiment or example. In addition, the described specific features, structures, materials, or characteristics may be combined in a proper manner in any one or more of the embodiments or examples.

Although the embodiments of the present invention have been shown and described, a person of ordinary skill in the art should understand that various changes, modifications and variations may be made to the embodiments without departing from the scope of the present invention as defined by the appended claims.

Reference numerals:
thermal management system 1;
heat pump module 100, compressor 110, in-cabin condenser 120, second heat exchanger 140, in-cabin evaporator 150, gas-liquid separator 160, first flow path 161, second flow path 162, reservoir 163, pre-refrigeration branch 170, first two-way valve 171, post-refrigeration branch 190, first one-way valve 191, pre-heating branch 1100, second one-way valve 1101, second two-way valve 1102, first expansion valve 1103, first section 1104, second section 1105, post-heating branch 1110, third two-way valve 1111;
electric powertrain water passage 200, electric powertrain 201, motor 210, motor controller 220, motor water pump 230, second radiator 240, direct connection branch 250;
engine water passage 310, engine 311, first radiator 312, first radiator water passage 313, warm air water passage 320, warm air core 321, warm air water pump 322, heater 323, second four-way valve 331, eighth valve port 332, ninth valve port 333, tenth valve port 334, and eleventh valve port 335;
battery direct cooling plate 400, second expansion valve 410;
first heat exchanger 500, first heat exchange channel 510, second heat exchange channel 520;
control valve group 600, first four-way valve 610, first valve port 611, second valve port 612, third valve port 613, fourth valve port 614, first three-way valve 620, fifth valve port 621, sixth valve port 622, seventh valve port 623;
exhaust heat exchanger 700, vehicle 1000.

## Claims

1. A thermal management system (1), comprising:
a heat pump module (100);
an electric powertrain water passage (200);
an engine water passage (310);
a first heat exchanger (500), the first heat exchanger (500) having a first heat exchange channel (510) and a second heat exchange channel (520), and the first heat exchange channel (510) being in communication with the heat pump module (100);
a battery direct cooling plate (400), the battery direct cooling plate (400) being in communication with the heat pump module (100); and
a control valve group (600), the control valve group (600) being in communication with the electric powertrain water passage (200), the engine water passage (310), and the second heat exchange channel (520), and the control valve group (600) being switchable between a first state and a second state;
wherein when the control valve group (600) is in the first state, the engine water passage (310) and the second heat exchange channel (520) are in communication in series; and
when the control valve group (600) is in the second state, the electric powertrain water passage (200) and the second heat exchange channel (520) are in communication in series,
**characterized in that** the control valve group (600) comprises:
a first four-way valve (610), wherein the first four-way valve (610) has a first valve port (611), a second valve port (612), a third valve port (613), and a fourth valve port (614), the first valve port (611) is in communication with one end of the electric powertrain water passage (200), the second valve port (612) is in communication with the other end of the electric powertrain water passage (200), and the third valve port (613) is in communication with one end of the second heat exchange channel (520); and
a first three-way valve (620), wherein the first three-way valve (620) has a fifth valve port (621), a sixth valve port (622), and a seventh valve port (623), the fifth valve port (621) is in communication with one end of the engine water passage (310), the sixth valve port (622), the other end of the engine water passage (310), and the other end of the second heat exchange channel (520) are in communication with each other, and the seventh valve port (623) is in communication with the fourth valve port (614);
wherein when the control valve group (600) is in the first state, the third valve port (613) is in communication with the fourth valve port (614), and the fifth valve port (621) is in communication with the seventh valve port (623); and
when the control valve group (600) is in the second state, the first valve port (611) is in communication with the fourth valve port (614), the second valve port (612) is in communication with the third valve port (613), and the sixth valve port (622) is in communication with the seventh valve port (623).

2. The thermal management system (1) according to claim 1, further comprising a warm air water passage (320), a warm air core (321) being arranged on the warm air water passage (320), and the warm air water passage (320) being in communication with the engine water passage (310) and the second heat exchange channel (520) through the control valve group (600); and
when the control valve group (600) is in the first state, the engine water passage (310), the warm air water passage (320), and the second heat exchange channel (520) being in communication in series,
preferably wherein the control valve group (600) further has a third state, and when the control valve group (600) is in the third state, the engine water passage (310) and the warm air water passage (320) are in communication in series,
and/or preferably wherein the control valve group (600) further has a fourth state, and when the control valve group (600) is in the fourth state, the warm air water passage (320) self-circulates.

3. The thermal management system (1) according to claim 2, wherein the control valve group (600) further has a fifth state, and when the control valve group (600) is in the fifth state, the electric powertrain water passage (200), the warm air water passage (320), and the second heat exchange channel (520) are in communication in series.

4. The thermal management system (1) according to any one of claims 1 to 3, wherein the control valve group (600) further has a sixth state, and when the control valve group (600) is in the sixth state, the engine water passage (310), the electric powertrain water passage (200), and the second heat exchange channel (520) are in communication in series.

5. The thermal management system (1) according to claim 1, further comprising: a warm air water passage (320), a warm air core (321) being arranged on the warm air water passage (320), the control valve group (600) further comprising a second four-way valve (331), the second four-way valve (331) having an eighth valve port (332), a ninth valve port (333), a tenth valve port (334), and an eleventh valve port (335), the eighth valve port (332) being in communication with one end of the engine water passage (310), the ninth valve port (333) being in communication with the other end of the engine water passage (310), the tenth valve port (334) being in communication with one end of the warm air water passage (320), the other end of the warm air water passage (320) being in communication with the other end of the second heat exchange channel (520), and the eleventh valve port (335) being in communication with the fifth valve port (621); and
when the control valve group (600) is in the first state, the eighth valve port (332) being in communication with the eleventh valve port (335), and the ninth valve port (333) being in communication with the tenth valve port (334), so that the engine water passage (310), the warm air water passage (320), and the second heat exchange channel (520) are in communication in series,
preferably wherein the control valve group (600) further has a third state, and when the control valve group (600) is in the third state, the fifth valve port (621) is in communication with the sixth valve port (622), the eighth valve port (332) is in communication with the eleventh valve port (335), and the ninth valve port (333) is in communication with the tenth valve port (334), so that the engine water passage (310) and the warm air water passage (320) are in communication in series.

6. The thermal management system (1) according to claim 5, wherein the control valve group (600) further has a fourth state, and when the control valve group (600) is in the fourth state, the fifth valve port (621) is in communication with the sixth valve port (622), and the tenth valve port (334) is in communication with the eleventh valve port (335), so that the warm air water passage (320) self-circulates.

7. The thermal management system (1) according to any one of claims 5 or 6, wherein the control valve group (600) further has a fifth state, and when the control valve group (600) is in the fifth state, the first valve port (611) is in communication with the fourth valve port (614), the second valve port (612) is in communication with the third valve port (613), and the sixth valve port (622) is in communication with the seventh valve port (623), so that the electric powertrain water passage (200), the warm air water passage (320), and the second heat exchange channel (520) are in communication in series.

8. The thermal management system (1) according to any one of claims 5 to 7, further comprising: a heater (323), the heater (323) being arranged between the fifth valve port (621) and the eleventh valve port (335), or the heater (323) being arranged on the warm air water passage (320).

9. The thermal management system (1) according to any one of claims 1 or 5 to 8, wherein the control valve group (600) further has a sixth state, and when the control valve group (600) is in the sixth state, the first valve port (611) is in communication with the fourth valve port (614), the second valve port (612) is in communication with the third valve port (613), and the fifth valve port (621) is in communication with the seventh valve port (623).

10. The thermal management system (1) according to any one of claims 1 to 9, further comprising: a first radiator water passage (313), a first radiator (312) being connected to the first radiator water passage (313), one end of the engine water passage (310) being in communication with one end of the first radiator water passage (313), the other end of the engine water passage (310) being in communication with the other end of the first radiator water passage (313), and the engine water passage (310) and the first radiator water passage (313) being selectively in communication in series or out of communication; and/or
wherein the electric powertrain water passage (200) comprises: an electric powertrain (201) and a second radiator (240), wherein the electric powertrain (201) and the second radiator (240) are connected in series,
preferably wherein the electric powertrain water passage (200) further comprises: a direct connection branch (250), wherein the second radiator (240) and the direct connection branch (250) are in communication in parallel, and the second radiator (240) and the direct connection branch (250) each switch between a state of being in communication with the electric powertrain (201) in series and a state of being out of communication with the electric powertrain (201).

11. The thermal management system (1) according to any one of claims 1 to 10, wherein the heat pump module (100) comprises:
a compressor (110);
an in-cabin condenser (120), wherein one end of the in-cabin condenser (120) is in communication with one end of the compressor (110);
a second heat exchanger (140), wherein one end of the second heat exchanger (140) is in communication with the other end of the in-cabin condenser (120) through a pre-refrigeration branch (170), and the other end of the second heat exchanger (140) is in communication with the other end of the in-cabin condenser (120) through a pre-heating branch (1100);
an in-cabin evaporator (150), wherein one end of the in-cabin evaporator (150) is in communication with the other end of the second heat exchanger (140) through a post-refrigeration branch (190); and
a gas-liquid separator (160), wherein one end of the gas-liquid separator (160) is in communication with one end of the second heat exchanger (140) through a post-heating branch (1110), one end of the gas-liquid separator (160) is in communication with the other end of the in-cabin evaporator (150), and the other end of the gas-liquid separator (160) is in communication with the other end of the compressor (110), preferably wherein the battery direct cooling plate (400), the first heat exchange channel (510), and the in-cabin evaporator (150) are in communication in parallel.

12. The thermal management system (1) according to claim 11, wherein a first two-way valve (171) is arranged on the pre-refrigeration branch (170);
a first one-way valve (191) is arranged on the post-refrigeration branch (190), and the first one-way valve (191) allows refrigerant of the second heat exchanger (140) to flow to the in-cabin evaporator (150);
a second two-way valve (1102), a first expansion valve (1103), and a second one-way valve (1101) are arranged on the pre-heating branch, and the second one-way valve (1101) allows refrigerant of the in-cabin condenser (120) to flow to the second heat exchanger (140); and
a third two-way valve (1111) is arranged on the post-heating branch (1110), preferably wherein the pre-heating branch (1100) comprises:
a first section (1104), wherein one end of the first section (1104) is in communication with the other end of the in-cabin condenser (120), and the other end of the first section (1104) is in communication with the first one-way valve (191) and the one end of the in-cabin evaporator (150); and
a second section (1105), wherein one end of the second section (1105) is in communication with the other end of the first section (1104), and the other end of the second section (1105) is in communication with the other end of the second heat exchanger (140),
wherein the second two-way valve (1102) is arranged on the first section (1104), and the first expansion valve (1103) and the second one-way valve (1101) are arranged on the second section (1105).

13. The thermal management system (1) according to claim 12, wherein the gas-liquid separator (160) comprises:
a first flow path (161), wherein one end of the first flow path (161) is in communication with the first one-way valve (191) and the other end of the first section (1104), and the other end of the first flow path (161) is in communication with the one end of the in-cabin evaporator (150) and the one end of the second section (1105); and
a second flow path (162), wherein one end of the second flow path (162) is in communication with the other end of the in-cabin evaporator (150), the post-heating branch (1110), and the one end of the second heat exchanger (140), and the other end of the second flow path (162) is in communication with the other end of the compressor (110).

14. A vehicle (1000), comprising: the thermal management system (1) according to any one of claims 1 to 13.

## Patentansprüche

1. Wärmemanagementsystem (1), das Folgendes umfasst:
ein Wärmepumpenmodul (100);
einen Wasserdurchlass für den elektrischen Antriebsstrang (200);
einen Motorwasserdurchgang (310);
einen ersten Wärmetauscher (500), wobei der erste Wärmetauscher (500) einen ersten Wärmetauschkanal (510) und einen zweiten Wärmetauschkanal (520) aufweist und der erste Wärmetauschkanal (510) mit dem Wärmepumpenmodul (100) in Verbindung steht;
eine Batterie-Direktkühlplatte (400), wobei die Batterie-Direktkühlplatte (400) in Verbindung mit dem Wärmepumpenmodul (100) steht; und
eine Steuerventilgruppe (600), wobei die Steuerventilgruppe (600) in Verbindung mit dem Wasserdurchgang (200) des elektrischen Antriebsstrangs, dem Wasserdurchgang (310) des Motors und dem zweiten Wärmeaustauschkanal (520) steht und die Steuerventilgruppe (600) zwischen einem ersten Zustand und einem zweiten Zustand umschaltbar ist;
wobei, wenn sich die Steuerventilgruppe (600) in dem ersten Zustand befindet, der Motorwasserkanal (310) und der zweite Wärmetauschkanal (520) in Reihe miteinander verbunden sind; und
wenn sich die Steuerventilgruppe (600) in dem zweiten Zustand befindet, der Wasserdurchlass (200) des elektrischen Antriebsstrangs und der zweite Wärmetauschkanal (520) in Reihe miteinander verbunden sind,
**dadurch gekennzeichnet, dass** die Steuerventilgruppe (600) umfasst:
ein erstes Vier-Wege-Ventil (610), wobei das erste Vier-Wege-Ventil (610) eine erste Ventilöffnung (611), eine zweite Ventilöffnung (612), eine dritte Ventilöffnung (613) und eine vierte Ventilöffnung (614) aufweist, wobei die erste Ventilöffnung (611) mit einem Ende des elektrischen Antriebsstrangwasserkanals (200) in Verbindung steht, der zweite Ventilanschluss (612) in Verbindung mit dem anderen Ende des Wasserkanals (200) des elektrischen Antriebsstrangs steht, und der dritte Ventilanschluss (613) in Verbindung mit einem Ende des zweiten Wärmeaustauschkanals (520) steht; und
ein erstes Drei-Wege-Ventil (620), wobei das erste Drei-Wege-Ventil (620) einen fünften Ventilanschluss (621), einen sechsten Ventilanschluss (622) und einen siebten Ventilanschluss (623) aufweist, wobei der fünfte Ventilanschluss (621) in Verbindung mit einem Ende des Motorwasserkanals (310) steht, der sechste Ventilanschluss (622), das andere Ende des Motorwasserkanals (310) und das andere Ende des zweiten Wärmeaustauschkanals (520) miteinander in Verbindung stehen und der siebte Ventilanschluss (623) mit dem vierten Ventilanschluss (614) in Verbindung steht;
wobei, wenn sich die Steuerventilgruppe (600) in dem ersten Zustand befindet, der dritte Ventilanschluss (613) mit dem vierten Ventilanschluss (614) in Verbindung steht, und der fünfte Ventilanschluss (621) mit dem siebten Ventilanschluss (623) in Verbindung steht; und
wenn sich die Steuerventilgruppe (600) im zweiten Zustand befindet, steht der erste Ventilanschluss (611) in Verbindung mit dem vierten Ventilanschluss (614), der zweite Ventilanschluss (612) steht in Verbindung mit dem dritten Ventilanschluss (613), und der sechste Ventilanschluss (622) steht in Verbindung mit dem siebten Ventilanschluss (623).

2. Wärmemanagementsystem (1) gemäß Anspruch 1, ferner umfassend einen Warmluftwasserkanal (320), wobei ein Warmluftkern (321) an dem Warmluftwasserkanal (320) angeordnet ist und der Warmluftwasserkanal (320) mit dem Motorwasserkanal (310) und dem zweiten Wärmetauschkanal (520) über die Steuerventilgruppe (600) in Verbindung steht; und
wenn sich die Steuerventilgruppe (600) in dem ersten Zustand befindet, der Motorwasserdurchgang (310), der Warmluftwasserdurchgang (320) und der zweite Wärmetauschkanal (520) in Reihe miteinander in Verbindung stehen,
wobei die Steuerventilgruppe (600) ferner einen dritten Zustand aufweist, und wenn sich die Steuerventilgruppe (600) in dem dritten Zustand befindet, der Motorwasserdurchlass (310) und der Warmluftwasserdurchlass (320) in Reihe miteinander verbunden sind,
und/oder vorzugsweise, wobei die Steuerventilgruppe (600) ferner einen vierten Zustand aufweist, und wenn sich die Steuerventilgruppe (600) in dem vierten Zustand befindet, der Warmluftwasserkanal (320) selbst zirkuliert.

3. Wärmemanagementsystem (1) gemäß Anspruch 2, wobei die Steuerventilgruppe (600) ferner einen fünften Zustand aufweist und, wenn sich die Steuerventilgruppe (600) in dem fünften Zustand befindet, der Wasserdurchlass (200) des elektrischen Antriebsstrangs, der Warmluft-Wasserdurchlass (320) und der zweite Wärmeaustauschkanal (520) in Reihe miteinander in Verbindung stehen.

4. Wärmemanagementsystem (1) gemäß einem der Ansprüche 1 bis 3, wobei die Steuerventilgruppe (600) ferner einen sechsten Zustand aufweist und, wenn sich die Steuerventilgruppe (600) in dem sechsten Zustand befindet, der Motorwasserdurchlass (310), der elektrische Antriebsstrangwasserdurchlass (200) und der zweite Wärmeaustauschkanal (520) in Reihe miteinander verbunden sind.

5. Wärmemanagementsystem (1) gemäß Anspruch 1, ferner umfassend einen Warmluftwasserkanal (320), wobei an dem Warmluftwasserkanal (320) ein Warmluftkern (321) angeordnet ist, wobei die Steuerventilgruppe (600) ferner ein zweites Vier-Wege-Ventil (331) aufweist, wobei das zweite Vier-Wege-Ventil (331) einen achten Ventilanschluss (332), einen neunten Ventilanschluss (333), einen zehnten Ventilanschluss (334) und einen elften Ventilanschluss (335) aufweist, wobei der achte Ventilanschluss (332) mit einem Ende des Motorwasserkanals (310) in Verbindung steht, wobei die achte Ventilöffnung (332) in Verbindung mit einem Ende des Motorwasserkanals (310) steht, die neunte Ventilöffnung (333) in Verbindung mit dem anderen Ende des Motorwasserkanals (310) steht, die zehnte Ventilöffnung (334) in Verbindung mit einem Ende des Warmluftwasserkanals (320) steht, das andere Ende des Warmluftwasserkanals (320) in Verbindung mit dem anderen Ende des zweiten Wärmetauscherkanals (520) steht und die elfte Ventilöffnung (335) in Verbindung mit der fünften Ventilöffnung (621) steht; und
wenn sich die Steuerventilgruppe (600) im ersten Zustand befindet, der achte Ventilanschluss (332) mit dem elften Ventilanschluss (335) in Verbindung steht und der neunte Ventilanschluss (333) mit dem zehnten Ventilanschluss (334) in Verbindung steht, so dass der Motorwasserdurchlass (310), der Warmluftwasserdurchlass (320) und der zweite Wärmetauschkanal (520) in Reihe miteinander in Verbindung stehen,
vorzugsweise wobei die Steuerventilgruppe (600) ferner einen dritten Zustand aufweist, und wenn sich die Steuerventilgruppe (600) in dem dritten Zustand befindet, der fünfte Ventilanschluss (621) mit dem sechsten Ventilanschluss (622) in Verbindung steht, der achte Ventilanschluss (332) mit dem elften Ventilanschluss (335) in Verbindung steht, und der neunte Ventilanschluss (333) mit dem zehnten Ventilanschluss (334) in Verbindung steht, so dass der Motorwasserdurchgang (310) und der Warmluftwasserdurchgang (320) in Reihe miteinander in Verbindung stehen.

6. Wärmemanagementsystem (1) gemäß Anspruch 5, wobei die Steuerventilgruppe (600) ferner einen vierten Zustand aufweist und, wenn sich die Steuerventilgruppe (600) in dem vierten Zustand befindet, die fünfte Ventilöffnung (621) mit der sechsten Ventilöffnung (622) in Verbindung steht und die zehnte Ventilöffnung (334) mit der elften Ventilöffnung (335) in Verbindung steht, so dass der Warmluftwasserkanal (320) selbst zirkuliert.

7. Wärmemanagementsystem (1) gemäß einem der Ansprüche 5 oder 6, wobei die Steuerventilgruppe (600) ferner einen fünften Zustand aufweist, und wenn sich die Steuerventilgruppe (600) in dem fünften Zustand befindet, der erste Ventilanschluss (611) mit dem vierten Ventilanschluss (614) in Verbindung steht, der zweite Ventilanschluss (612) mit dem dritten Ventilanschluss (613) in Verbindung steht, und der sechste Ventilanschluss (622) mit dem siebten Ventilanschluss (623) in Verbindung steht, so dass der Wasserdurchlass (200) des elektrischen Antriebsstrangs, der Warmluftwasserdurchlass (320) und der zweite Wärmeaustauschkanal (520) in Reihe miteinander in Verbindung stehen.

8. Wärmemanagementsystem (1) gemäß einem der Ansprüche 5 bis 7, ferner umfassend: ein Heizelement (323), wobei das Heizelement (323) zwischen dem fünften Ventilanschluss (621) und dem elften Ventilanschluss (335) angeordnet ist, oder das Heizelement (323) am Warmluft-Wasserdurchlass (320) angeordnet ist.

9. Wärmemanagementsystem (1) gemäß einem der Ansprüche 1 oder 5 bis 8, wobei die Steuerventilgruppe (600) ferner einen sechsten Zustand aufweist und, wenn sich die Steuerventilgruppe (600) in dem sechsten Zustand befindet, der erste Ventilanschluss (611) in Verbindung mit dem vierten Ventilanschluss (614) steht, der zweite Ventilanschluss (612) in Verbindung mit dem dritten Ventilanschluss (613) steht und der fünfte Ventilanschluss (621) in Verbindung mit dem siebten Ventilanschluss (623) steht.

10. Das Wärmemanagementsystem (1) gemäß einem der Ansprüche 1 bis 9, ferner umfassend: einen ersten Kühlerwasserkanal (313), einen ersten Kühler (312), der mit dem ersten Kühlerwasserkanal (313) verbunden ist, wobei ein Ende des Motorwasserkanals (310) mit einem Ende des ersten Kühlerwasserkanals (313) in Verbindung steht, das andere Ende des Motorwasserkanals (310) mit dem anderen Ende des ersten Kühlerwasserkanals (313) in Verbindung steht und der Motorwasserkanal (310) und der erste Kühlerwasserkanal (313) wahlweise in Reihe in Verbindung stehen oder außer Verbindung sind; und/oder
wobei der Wasserkanal für den elektrischen Antriebsstrang (200) umfasst: einen elektrischen Antriebsstrang (201) und einen zweiten Kühler (240), wobei der elektrische Antriebsstrang (201) und der zweite Kühler (240) in Reihe geschaltet sind,
vorzugsweise, wobei der Wasserkanal (200) des elektrischen Antriebsstrangs ferner Folgendes umfasst: einen Direktverbindungszweig (250), wobei der zweite Kühler (240) und der Direktverbindungszweig (250) parallel miteinander in Verbindung stehen und der zweite Kühler (240) und der Direktverbindungszweig (250) jeweils zwischen einem Zustand, in dem sie mit dem elektrischen Antriebsstrang (201) in Reihe geschaltet sind, und einem Zustand, in dem sie nicht mit dem elektrischen Antriebsstrang (201) in Verbindung stehen, umschalten.

11. Das Wärmemanagementsystem (1) gemäß einem der Ansprüche 1 bis 10, wobei das Wärmepumpenmodul (100) Folgendes umfasst:
einen Kompressor (110);
einen kabineninternen Verflüssiger (120), wobei ein Ende des kabineninternen Verflüssigers (120) mit einem Ende des Kompressors (110) in Verbindung steht
einen zweiten Wärmetauscher (140), wobei ein Ende des zweiten Wärmetauschers (140) mit dem anderen Ende des kabineninternen Kondensators (120) über einen Vorkühlungszweig (170) in Verbindung steht und das andere Ende des zweiten Wärmetauschers (140) mit dem anderen Ende des kabineninternen Kondensators (120) über einen Vorheizungszweig (1100) in Verbindung steht;
einen kabineninternen Verdampfer (150), wobei ein Ende des kabineninternen Verdampfers (150) mit dem anderen Ende des zweiten Wärmetauschers (140) über einen Nachkühlungszweig (190) in Verbindung steht; und
einen Gas-Flüssigkeits-Abscheider (160), wobei ein Ende des Gas-Flüssigkeits-Abscheiders (160) mit einem Ende des zweiten Wärmetauschers (140) über einen Nacherwärmungszweig (1110) in Verbindung steht, ein Ende des Gas-Flüssigkeits-Abscheiders (160) mit dem anderen Ende des kabineninternen Verdampfers (150) in Verbindung steht, und das andere Ende des Gas-Flüssigkeits-Abscheiders (160) mit dem anderen Ende des Kompressors (110) in Verbindung steht, wobei vorzugsweise die Batterie-Direktkühlplatte (400), der erste Wärmeaustauschkanal (510) und der kabineninterne Verdampfer (150) parallel miteinander in Verbindung stehen.

12. Wärmemanagementsystem (1) gemäß Anspruch 11, wobei ein erstes Zweiwegeventil (171) am Vorkühlungszweig (170) angeordnet ist;
ein erstes Einwegventil (191) auf dem Nachkühlungszweig (190) angeordnet ist und das erste Einwegventil (191) es dem Kältemittel des zweiten Wärmetauschers (140) ermöglicht, zum Verdampfer (150) in der Kabine zu fließen;
ein zweites Zweiwegeventil (1102), ein erstes Expansionsventil (1103) und ein zweites Einwegeventil (1101) an dem Vorheizzweig angeordnet sind und das zweite Einwegeventil (1101) es dem Kältemittel des kabineninternen Verflüssigers (120) ermöglicht, zu dem zweiten Wärmetauscher (140) zu strömen; und
ein drittes Zweiwegeventil (1111) am Nachheizungszweig (1110) angeordnet ist,
wobei der Vorheizungszweig (1100) vorzugsweise umfasst:
einen ersten Abschnitt (1104), wobei ein Ende des ersten Abschnitts (1104) in Verbindung mit dem anderen Ende des kabineninternen Kondensators (120) steht, und das andere Ende des ersten Abschnitts (1104) in Verbindung mit dem ersten Einwegventil (191) und dem einen Ende des kabineninternen Verdampfers (150) steht; und
einen zweiten Abschnitt (1105), wobei ein Ende des zweiten Abschnitts (1105) mit dem anderen Ende des ersten Abschnitts (1104) in Verbindung steht, und das andere Ende des zweiten Abschnitts (1105) mit dem anderen Ende des zweiten Wärmetauschers (140) in Verbindung steht;
wobei das zweite Zweiwegeventil (1102) an dem ersten Abschnitt (1104) angeordnet ist und das erste Expansionsventil (1103) und das zweite Einwegeventil (1101) an dem zweiten Abschnitt (1105) angeordnet sind.

13. Thermomanagementsystem (1) gemäß Anspruch 12, wobei der Gas-Flüssigkeits-Abscheider (160) umfasst:
einen ersten Strömungsweg (161), wobei ein Ende des ersten Strömungswegs (161) mit dem ersten Einwegventil (191) und dem anderen Ende des ersten Abschnitts (1104) in Verbindung steht, und das andere Ende des ersten Strömungswegs (161) mit dem einen Ende des kabineninternen Verdampfers (150) und dem einen Ende des zweiten Abschnitts (1105) in Verbindung steht; und
einen zweiten Strömungsweg (162), wobei ein Ende des zweiten Strömungswegs (162) mit dem anderen Ende des kabineninternen Verdampfers (150), dem Nachheizzweig (1110) und dem einen Ende des zweiten Wärmetauschers (140) in Verbindung steht, und das andere Ende des zweiten Strömungswegs (162) mit dem anderen Ende des Kompressors (110) in Verbindung steht.

14. Fahrzeug (1000), umfassend: das Wärmemanagementsystem (1) gemäß einem der Ansprüche 1 bis 13.

## Revendications

1. Système de gestion thermique (1), comprenant:
un module de pompe à chaleur (100);
un passage d'eau du groupe motopropulseur électrique (200);
un passage d'eau du moteur (310);
un premier échangeur de chaleur (500), le premier échangeur de chaleur (500) ayant un premier canal d'échange de chaleur (510) et un deuxième canal d'échange de chaleur (520), et le premier canal d'échange de chaleur (510) étant en communication avec le module de pompe à chaleur (100);
une plaque de refroidissement direct de la batterie (400), la plaque de refroidissement direct de la batterie (400) étant en communication avec le module de pompe à chaleur (100); et
un groupe de vannes de commande (600), le groupe de vannes de commande (600) étant en communication avec le passage d'eau du groupe motopropulseur électrique (200), le passage d'eau du moteur (310) et le deuxième canal d'échange de chaleur (520), et le groupe de vannes de commande (600) pouvant être commuté entre un premier état et un deuxième état;
dans lequel, lorsque le groupe de vannes de commande (600) est dans le premier état, le passage d'eau du moteur (310) et le deuxième canal d'échange de chaleur (520) sont en communication en série; et
lorsque le groupe de vannes de commande (600) est dans le deuxième état, le passage d'eau du groupe motopropulseur électrique (200) et le deuxième canal d'échange de chaleur (520) sont en communication en série,
**caractérisé en ce que** le groupe de vannes de commande (600) comprend:
une première vanne à quatre voies (610), dans laquelle la première vanne à quatre voies (610) présente un premier orifice de vanne (611), un deuxième orifice de vanne (612), un troisième orifice de vanne (613) et un quatrième orifice de vanne (614), le premier orifice de vanne (611) est en communication avec une extrémité du passage d'eau du groupe motopropulseur électrique (200), le deuxième orifice de soupape (612) est en communication avec l'autre extrémité du passage d'eau du groupe motopropulseur électrique (200), et le troisième orifice de soupape (613) est en communication avec une extrémité du deuxième canal d'échange thermique (520); et
une première vanne à trois voies (620), dans laquelle la première vanne à trois voies (620) possède un cinquième port de vanne (621), un sixième port de vanne (622), et un septième port de vanne (623), le cinquième port de vanne (621) est en communication avec une extrémité du passage d'eau du moteur (310), le sixième orifice de soupape (622), l'autre extrémité du passage d'eau du moteur (310) et l'autre extrémité du deuxième canal d'échange de chaleur (520) sont en communication l'un avec l'autre, et le septième orifice de soupape (623) est en communication avec le quatrième orifice de soupape (614);
dans lequel, lorsque le groupe de vannes de commande (600) est dans le premier état, le troisième orifice de vanne (613) est en communication avec le quatrième orifice de vanne (614), et le cinquième orifice de vanne (621) est en communication avec le septième orifice de vanne (623); et
lorsque le groupe de vannes de commande (600) est dans le deuxième état, le premier orifice de vanne (611) est en communication avec le quatrième orifice de vanne (614), le deuxième orifice de vanne (612) est en communication avec le troisième orifice de vanne (613), et le sixième orifice de vanne (622) est en communication avec le septième orifice de vanne (623).

2. Système de gestion thermique (1) selon la revendication 1, comprend en outre un passage d'eau d'air chaud (320), un noyau d'air chaud (321) étant disposé sur le passage d'eau d'air chaud (320), et le passage d'eau d'air chaud (320) étant en communication avec le passage d'eau du moteur (310) et le deuxième canal d'échange de chaleur (520) à travers le groupe de vannes de commande (600); et.
lorsque le groupe de vannes de commande (600) est dans le premier état, le passage d'eau du moteur (310), le passage d'eau de l'air chaud (320) et le deuxième canal d'échange de chaleur (520) étant en communication en série,
de préférence dans lequel le groupe de vannes de commande (600) présente en outre un troisième état, et lorsque le groupe de vannes de commande (600) est dans le troisième état, le passage d'eau du moteur (310) et le passage d'eau de l'air chaud (320) sont en communication en série,
et/ou de préférence dans lequel le groupe de vannes de commande (600) a en outre un quatrième état, et lorsque le groupe de vannes de commande (600) est dans le quatrième état, le passage d'eau d'air chaud (320) est en auto-circulation.

3. Système de gestion thermique (1) selon la revendication 2, dans lequel le groupe de vannes de commande (600) présente en outre un cinquième état, et lorsque le groupe de vannes de commande (600) est dans le cinquième état, le passage d'eau du groupe motopropulseur électrique (200), le passage d'eau de l'air chaud (320) et le deuxième canal d'échange de chaleur (520) sont en communication en série.

4. Système de gestion thermique (1) selon l'une quelconque des revendications 1 à 3, dans lequel le groupe de vannes de commande (600) présente en outre un sixième état, et lorsque le groupe de vannes de commande (600) est dans le sixième état, le passage d'eau du moteur (310), le passage d'eau du groupe motopropulseur électrique (200), et le deuxième canal d'échange de chaleur (520) sont en communication en série.

5. Système de gestion thermique (1) selon la revendication 1, comprenant en outre : un passage d'eau d'air chaud (320), un noyau d'air chaud (321) étant disposé sur le passage d'eau d'air chaud (320), le groupe de vannes de commande (600) comprenant en outre une deuxième vanne à quatre voies (331), la deuxième vanne à quatre voies (331) ayant un huitième orifice de vanne (332), un neuvième orifice de vanne (333), un dixième orifice de vanne (334), et un onzième orifice de vanne (335), le huitième orifice de vanne (332) étant en communication avec une extrémité du passage d'eau du moteur (310), le neuvième orifice de soupape (333) étant en communication avec l'autre extrémité du passage d'eau du moteur (310), le dixième orifice de soupape (334) étant en communication avec une extrémité du passage d'eau d'air chaud (320), l'autre extrémité du passage d'eau d'air chaud (320) étant en communication avec l'autre extrémité du deuxième canal d'échange de chaleur (520), et le onzième orifice de soupape (335) étant en communication avec le cinquième orifice de soupape (621); et
lorsque le groupe de vannes de commande (600) est dans le premier état, le huitième orifice de vanne (332) étant en communication avec le onzième orifice de vanne (335), et le neuvième orifice de vanne (333) étant en communication avec le dixième orifice de vanne (334), de sorte que le passage d'eau du moteur (310), le passage d'eau de l'air chaud (320), et le deuxième canal d'échange de chaleur (520) sont en communication en série,
de préférence, dans lequel le groupe de vannes de commande (600) présente en outre un troisième état, et lorsque le groupe de vannes de commande (600) est dans le troisième état, le cinquième orifice de vanne (621) est en communication avec le sixième orifice de vanne (622), le huitième orifice de vanne (332) est en communication avec le onzième orifice de vanne (335), et le neuvième orifice de vanne (333) est en communication avec le dixième orifice de vanne (334), de sorte que le passage d'eau du moteur (310) et le passage d'eau de l'air chaud (320) sont en communication en série.

6. Système de gestion thermique (1) selon la revendication 5, dans lequel le groupe de vannes de commande (600) présente en outre un quatrième état, et lorsque le groupe de vannes de commande (600) est dans le quatrième état, le cinquième orifice de vanne (621) est en communication avec le sixième orifice de vanne (622), et le dixième orifice de vanne (334) est en communication avec le onzième orifice de vanne (335), de sorte que le passage d'eau d'air chaud (320) s'auto-circule.

7. Système de gestion thermique (1) selon l'une quelconque des revendications 5 ou 6, dans lequel le groupe de vannes de commande (600) présente en outre un cinquième état, et lorsque le groupe de vannes de commande (600) est dans le cinquième état, le premier port de vanne (611) est en communication avec le quatrième port de vanne (614), le deuxième orifice de soupape (612) est en communication avec le troisième orifice de soupape (613), et le sixième orifice de soupape (622) est en communication avec le septième orifice de soupape (623), de sorte que le passage d'eau du groupe motopropulseur électrique (200), le passage d'eau de l'air chaud (320) et le deuxième canal d'échange de chaleur (520) sont en communication en série.

8. Système de gestion thermique (1) selon l'une quelconque des revendications 5 à 7, comprend en outre : un réchauffeur (323), le réchauffeur (323) étant disposé entre le cinquième orifice de vanne (621) et le onzième orifice de vanne (335), ou le réchauffeur (323) étant disposé sur le passage d'eau d'air chaud (320).

9. Système de gestion thermique (1) selon l'une quelconque des revendications 1 ou 5 à 8, dans lequel le groupe de vannes de commande (600) présente en outre un sixième état, et lorsque le groupe de vannes de commande (600) est dans le sixième état, le premier port de vanne (611) est en communication avec le quatrième port de vanne (614), le deuxième port de vanne (612) est en communication avec le troisième port de vanne (613), et le cinquième port de vanne (621) est en communication avec le septième port de vanne (623).

10. Système de gestion thermique (1) selon l'une quelconque des revendications 1 à 9, comprenant en outre: un premier passage d'eau de radiateur (313), un premier radiateur (312) étant connecté au premier passage d'eau de radiateur (313), une extrémité du passage d'eau de moteur (310) étant en communication avec une extrémité du premier passage d'eau de radiateur (313), l'autre extrémité du passage d'eau de moteur (310) étant en communication avec l'autre extrémité du premier passage d'eau de radiateur (313), et le passage d'eau de moteur (310) et le premier passage d'eau de radiateur (313) étant sélectivement en communication en série ou hors communication; et/ou.
dans lequel le passage d'eau du groupe motopropulseur électrique (200) comprend: un groupe motopropulseur électrique (201) et un deuxième radiateur (240), le groupe motopropulseur électrique (201) et le deuxième radiateur (240) étant connectés en série,
de préférence, dans lequel le passage d'eau du groupe motopropulseur électrique (200) comprend en outre : une branche de connexion directe (250), dans laquelle le deuxième radiateur (240) et la branche de connexion directe (250) sont en communication en parallèle, et le deuxième radiateur (240) et la branche de connexion directe (250) commutent chacun entre un état d'être en communication avec le groupe motopropulseur électrique (201) en série et un état d'être hors de communication avec le groupe motopropulseur électrique (201).

11. Système de gestion thermique (1) selon l'une quelconque des revendications 1 à 10, dans lequel le module de pompe à chaleur (100) comprend:
un compresseur (110);
un condenseur d'habitacle (120), dans lequel une extrémité du condenseur d'habitacle (120) est en communication avec une extrémité du compresseur (110);
un deuxième échangeur de chaleur (140), dans lequel une extrémité du deuxième échangeur de chaleur (140) est en communication avec l'autre extrémité du condenseur de cabine (120) par l'intermédiaire d'une branche de pré-réfrigération (170), et l'autre extrémité du deuxième échangeur de chaleur (140) est en communication avec l'autre extrémité du condenseur de cabine (120) par l'intermédiaire d'une branche de préchauffage (1100);
un évaporateur de cabine (150), dans lequel une extrémité de l'évaporateur de cabine (150) est en communication avec l'autre extrémité du deuxième échangeur de chaleur (140) par l'intermédiaire d'une branche de post-réfrigération (190); et
un séparateur gaz-liquide (160), dans lequel une extrémité du séparateur gaz-liquide (160) est en communication avec une extrémité du deuxième échangeur de chaleur (140) à travers une branche de post-réfrigération (1110), une extrémité du séparateur gaz-liquide (160) est en communication avec l'autre extrémité de l'évaporateur en cabine (150), et l'autre extrémité du séparateur gaz-liquide (160) est en communication avec l'autre extrémité du compresseur (110), de préférence dans lequel la plaque de refroidissement direct de la batterie (400), le premier canal d'échange thermique (510) et l'évaporateur de cabine (150) sont en communication en parallèle.

12. Système de gestion thermique (1) selon la revendication 11, dans lequel une première vanne à deux voies (171) est disposée sur la branche de pré-réfrigération (170);
une première vanne unidirectionnelle (191) est disposée sur la branche de post-réfrigération (190), et la première vanne unidirectionnelle (191) permet au réfrigérant du deuxième échangeur de chaleur (140) de s'écouler vers l'évaporateur (150) de la cabine;
une deuxième vanne à deux voies (1102), un premier détendeur (1103) et une deuxième vanne à une voie (1101) sont disposés sur la branche de préchauffage, et la deuxième vanne à une voie (1101) permet au réfrigérant du condenseur de la cabine (120) de circuler vers le deuxième échangeur de chaleur (140); et
une troisième vanne à deux voies (1111) est disposée sur la branche de post-chauffage (1110), de préférence dans lequel la branche de préchauffage (1100) comprend:
une première section (1104), dans laquelle une extrémité de la première section (1104) est en communication avec l'autre extrémité du condenseur de cabine (120), et l'autre extrémité de la première section (1104) est en communication avec la première vanne unidirectionnelle (191) et l'une des extrémités de l'évaporateur de cabine (150); et.
une deuxième section (1105), dans laquelle une extrémité de la deuxième section (1105) est en communication avec l'autre extrémité de la première section (1104), et l'autre extrémité de la deuxième section (1105) est en communication avec l'autre extrémité du deuxième échangeur de chaleur (140);
dans lequel la deuxième vanne à deux voies (1102) est disposée sur la première section (1104), et le premier détendeur (1103) et la deuxième vanne à une voie (1101) sont disposés sur la deuxième section (1105).

13. Système de gestion thermique (1) selon la revendication 12, dans lequel le séparateur gaz-liquide (160) comprend:
une première voie d'écoulement (161), dans laquelle une extrémité de la première voie d'écoulement (161) est en communication avec la première vanne unidirectionnelle (191) et l'autre extrémité de la première section (1104), et l'autre extrémité de la première voie d'écoulement (161) est en communication avec l'une des extrémités de l'évaporateur de la cabine (150) et l'une des extrémités de la deuxième section (1105); et
une deuxième voie d'écoulement (162), dans laquelle une extrémité de la deuxième voie d'écoulement (162) est en communication avec l'autre extrémité de l'évaporateur de cabine (150), la branche de post-chauffage (1110), et l'une des extrémités du deuxième échangeur de chaleur (140), et l'autre extrémité de la deuxième voie d'écoulement (162) est en communication avec l'autre extrémité du compresseur (110).

14. Véhicule (1000), comprenant: le système de gestion thermique (1) selon l'une quelconque des revendications 1 à 13.
